# EUROPEAN PATENT SPECIFICATION

(11) **EP 1 415 847 B1**
(45) Date of publication and mention of the grant of the patent: **06.09.2006**
(21) Application number: 02292693.5
(22) Date of filing: 30.10.2002
(51) Int. Cl.: B60K 17/24, F16C 35/00

(54) **Bearing support arrangements**
Lagergehäuse
Système de support pour un corps de palier

(43) Date of publication of application: 06.05.2004
(73) Proprietor: Renault S.A., 92100 Boulogne Billancourt (FR)
(72) Inventor: François, Jean Claude, 78310 Coignieres (FR); Rouyer, Johan Vincent, 92800 Puteaux (FR)
(74) Representative: Davies, Owen Robert Treharne

(56) References cited:
- DE-A- 3 209 657
- FR-A- 724 292
- US-A- 3 140 901
- US-A- 4 412 753
- US-A- 4 652 151
- US-A- 4 676 670
- US-A- 5 234 271
- US-A- 5 551 783
- US-A- 5 681 117

## Description

The present invention relates to bearing support arrangements suitable for a drive shaft bearing of a vehicle.

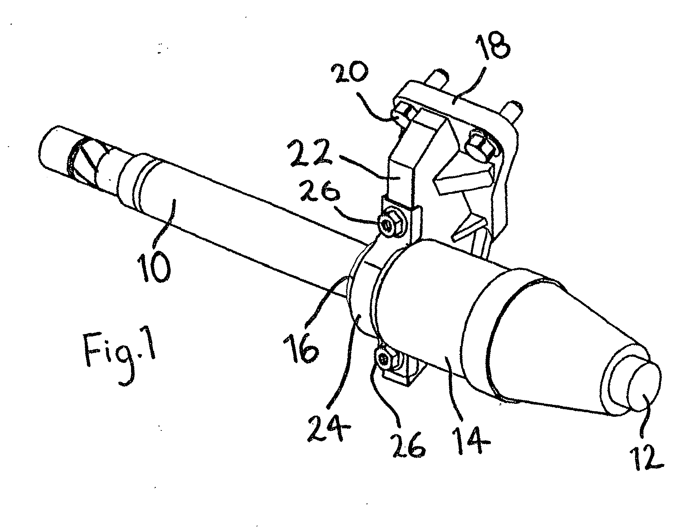

It is known to provide drive shafts of vehicles with bearings part way along their length, such bearings sometimes being referred to in the art as drive shaft centre bearings. Examples of prior art drive shaft centre bearing arrangements can be found in relation to rear wheel drive vehicles in US-5551783 and US-6422947. As discussed in the prior art, drive shaft centre bearings can be used to reduce the effects of noise, vibration and harshness (NVH) transmitted into the user compartment from the drive train. It is also known to provide a centre bearing along a drive shaft arrangement of a front wheel drive vehicle, a possible example of which is shown schematically with reference to Figure 1.

In Figure 1, a drive shaft arrangement includes an inner drive shaft 10 that is connected to an outer drive shaft 12 by means of a universal/constant-velocity joint 14. Just inboard of the universal joint 14, the inner drive shaft 10 is provided with a drive shaft centre bearing 16. The centre bearing 16 is mounted into a centre bearing support bracket 18, which is attached to an engine block (not shown) by means of a series of bolts 20. The support bracket 18 includes a bearing seat 22, in which the centre bearing 16 is retained by means of a bearing cap 24 clamped against the bearing seat 22 by a pair of bolts 26 disposed one on each side of the bearing cap 24. A driveshaft arrangement of this general type is proposed in US-5234271 which shows the use of a driveshaft bearing support in a vehicle driveshaft arrangement according to the preamble of claim 1.

Furthermore, FR 724 292 shows a driveshaft bearing support apparatus according to the preamble of claim 3.

In a vehicle that has driven front wheels, such front wheel drive shafts 10, 12 often run transverse to the vehicle centre-line and therefore across a lower portion of an engine bay. If it becomes necessary to remove the inner drive shaft 10, it may prove difficult and/or time consuming to access one or the other fixing bolts 26 so as to remove the bearing cap 24 and release the centre bearing 16. Space constraints may similarly give rise to accessibility problems with drive shaft bearings in vehicles having rear or all wheel drive.

It is an object of the present invention to provide an improved bearing support arrangement and in particular to provide an improved bearing support arrangement suitable for supporting a bearing of a rotatable shaft such as a drive shaft of a vehicle.

These objects are achieved by the use of a driveshaft bearing support apparatus in a vehicle driveshaft arrangement according to claim 1, by a bearing support apparatus according to claim 3, and by a method of retaining in position a vehicle driveshaft centre bearing on a vehicle according to claim 11.

Accordingly, the present invention provides a vehicle driveshaft arrangement with a driveshaft bearing support apparatus adapted to house a driveshaft bearing used for rotatably supporting a drive shaft of a vehicle, said bearing support apparatus comprising a support member that defines a bearing seat adapted to receive said driveshaft bearing and a retaining member adapted to trap said driveshaft bearing in said bearing seat, characterised in that said retaining member is connected to said support member at a fulcrum and is pivotally moveable about said fulcrum between an open position in which said driveshaft bearing is removable from said bearing seat and a closed position in which said driveshaft bearing is trapped in said bearing seat.

By using a pivoting retaining member, an arrangement according to the present invention may prove advantageous during assembly or servicing operations. The number of separate fixings that need to be supplied to and fitted on the production line may be reduced compared with some prior art arrangements. Furthermore, an arrangement according to the invention may prove advantageous in installations having limited access for fitting or servicing a drive shaft and/or associated bearing. The bearing retainer may simply be pivoted open fully or part way, rather than needing complete removal from the bearing support.

Said bearing seat includes a portion that is substantially annular in cross section and is open across a sector thereof. A chord across said open sector is shorter than a diameter of said bearing. Said bearing support member may further comprise a shoulder across at least a portion of one end of said bearing seat so as to define a limit to an axial position of said bearing in said seat. By limiting the extent of the open sector to one in which a chord thereacross is shorter than an outer diameter of the bearing, it is possible to ensure that the bearing will not fall out of its seat in a radial direction during assembly or servicing operations.

Said retaining member may be adapted to trap said bearing in place by closing said open sector in such a manner as to restrict movement of said bearing in at least one axial direction.

Said retaining member may be adapted to be fixed in place in said closed position, preferably by means of a single mechanical fixing.

At least a portion of said retaining member may be adapted in said closed position to envelop, at least partially, substantially opposing axial faces of an outer casing of said bearing.

Said retaining member may be formed from a planar material, preferably shaped by means of a deformation technique.

Said retaining member may be attached to said support member at said fulcrum by a pivot pin.

Said bearing may comprise a roller bearing and said retaining member may comprise a bearing cap having a portion substantially corresponding to a profile of a sector of an outer race of said roller bearing, said bearing cap preferably being adapted to close substantially directly onto said sector.

Said apparatus may comprise a mounting apparatus for a drive shaft bearing of a vehicle, said drive shaft preferably being operably connected to a front driven member of said vehicle. The drive shaft may be in a drive line between an output of a transmission or differential and a driven front member of said vehicle, said driven member comprising for example a wheel.

The present invention also provides a method of retaining in position a vehicle driveshaft centre-bearing on a vehicle, the method including trapping said bearing in place in a bearing seat defined in a drive shaft bearing support using a bearing cap that is pivotally connected to said support and is adapted to pivot between an open position in which said drive shaft bearing is removable from said bearing seat and a closed position in which said drive shaft bearing is trapped in place in said bearing seat by said retaining member. The method may include fitting said bearing to said drive shaft before introducing said bearing into said bearing seat.

The method may include delivering to a production line a bearing assembly part assembled, in which said bearing cap is loosely assembled to a support arm. Said bearing cap may be loosely assembled by starting a bolt in its thread. The bearing cap may be loosely assembled such that it can be opened into an intermediate position in which there is enough clearance for fitting said bearing.

The present invention will now be described by way of example only and with reference to the accompanying drawings, in which :
Figure 1 is a schematic representation of part of an arrangement for drive shaft bearing support ;
Figure 2 is a schematic plan view of a vehicle having a powertrain including a bearing support arrangement according to an embodiment of the invention ;
Figure 3 is a rear side view of a powertrain of the vehicle of Figure 2 seen in the direction of the arrow A ;
Figure 4 is perspective view of a bearing support arrangement of Figures 2 and 3, the bearing support being illustrated in open (OP), closed (CL) and intermediate (IT) positions;
Figure 5A is a front view of the bearing support of Figure 4 ;
Figure 5B is a side view of the bearing support of Figure 5A seen in the direction of the Arrow B ;
Figure 5C is a side view of the bearing support of Figure 5A seen in the direction of the Arrow C ;
Figure 6 is a section through the bearing support of Figure 5A, seen along the line D-D with the bearing support being illustrated in an open position OP;
Figure 7 is a section through the bearing support of Figure 5A, seen along the line D-D with the bearing support being illustrated in a closed position CL;
Figure 8A is a side view of the bearing support of Figure 4, similar to the side view of Figure 5C ;
Figure 8B is a section through the view of Figure 8A along the line E-E ;
Figure 8C is a section through the view of Figure 8A along the line F-F ;
Figure 9 is a perspective view of a step in a method of assembling a drive shaft and associated bearing support arrangement according to an embodiment of the present invention ; and
Figure 10 is a perspective view of a bearing support of Figures 4 to 9 in a part assembled state.

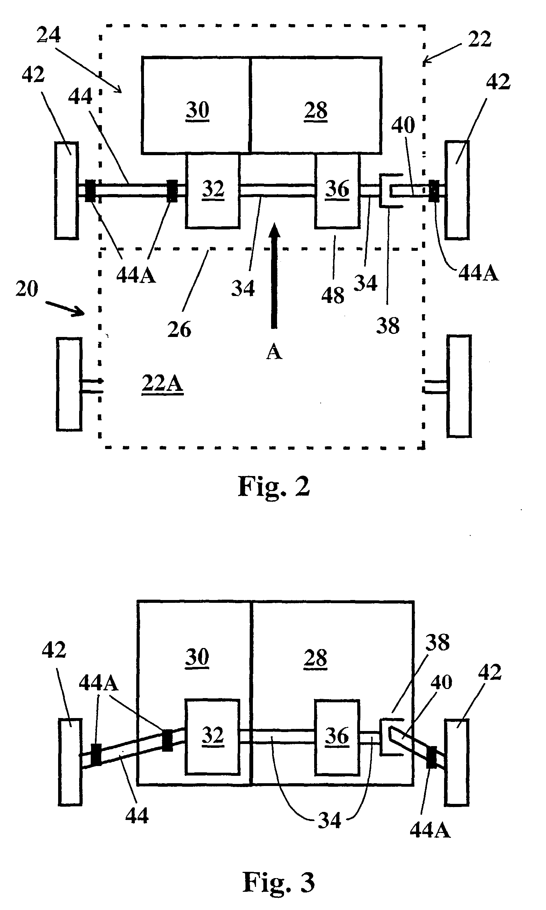

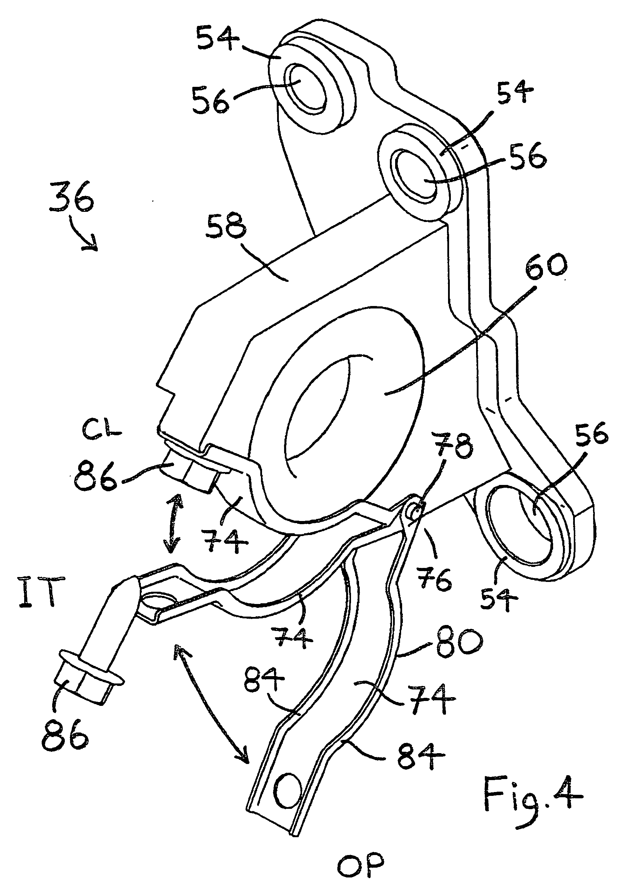

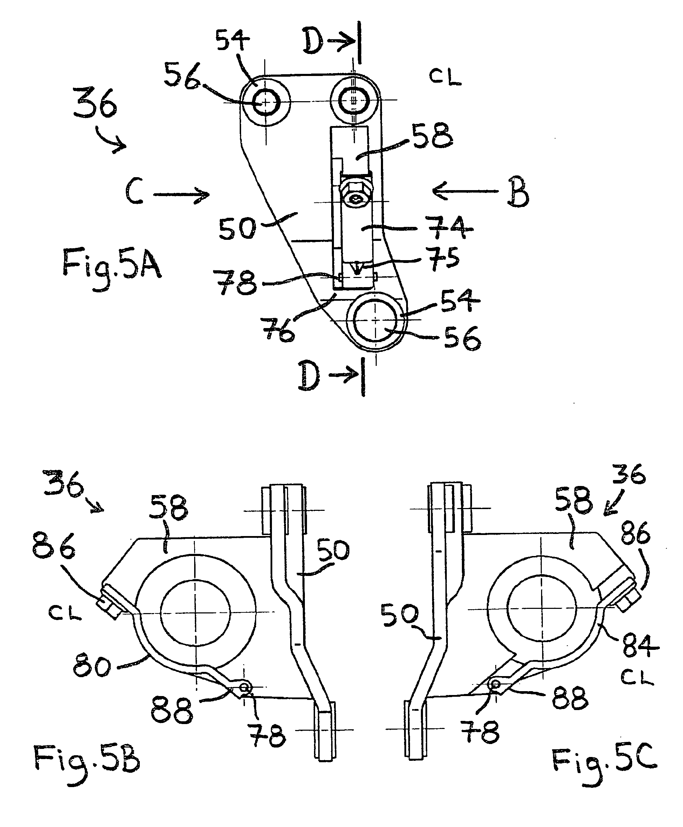

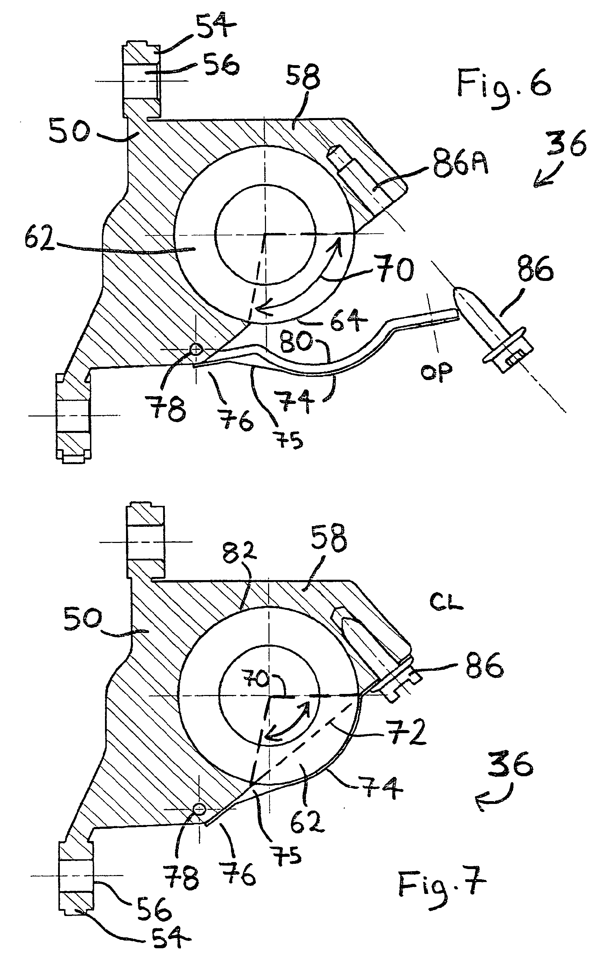

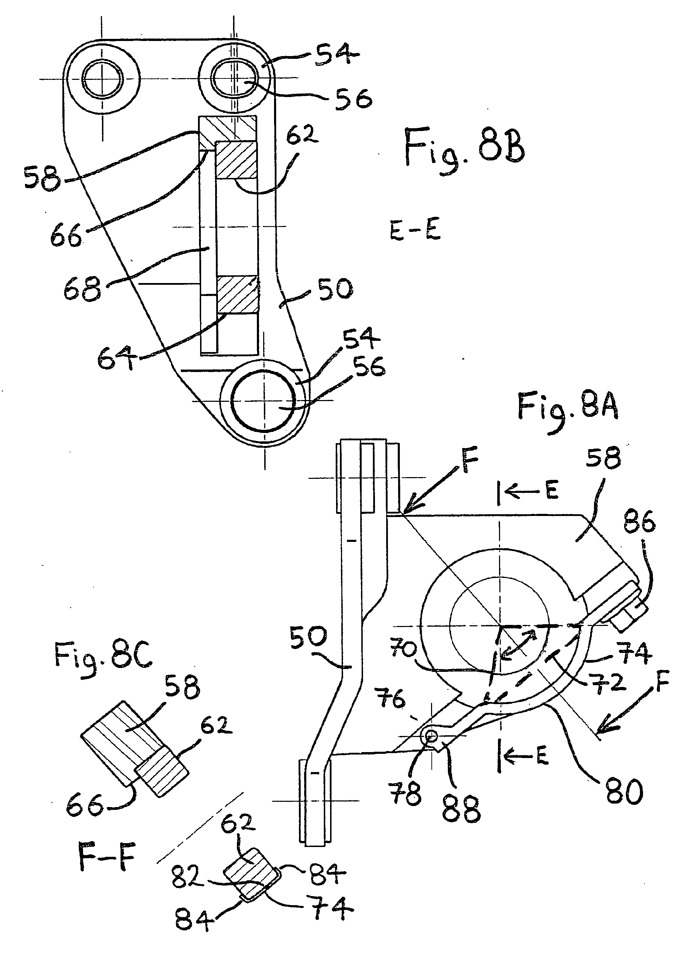

Referring to Figures 2 to 10, a vehicle 20 comprises a body 22 in which is defined an engine bay 24, separated from a passenger compartment 22A of the vehicle 20 by a firewall 26. A transverse powertrain is disposed in the engine bay 24 and comprises an engine 28 coupled to a transmission 30 that includes a differential 32. A series of drive shafts 34, 40, 44 runs substantially transverse to the centreline of the vehicle 10 and delivers torque output from the differential 32 to a set of front wheels 42.

A first driveline in the form of a drive shaft 44 is connected from one output of the differential 32 to an associated front wheel 42 and may be a single stage drive shaft 44. A universal coupling 44A may be provided towards each end of the drive shaft 44 so as to allow for relative movement about its axis of rotation. From another output of the differential 32, drive to another wheel 42 is provided through a second drive line comprising an inner drive shaft 34 and an outer drive shaft 40. These inner and outer drive shafts 34, 40 are connected together by means of a universal coupling 38, while towards an outboard end of the outer drive shaft 40 a further universal coupling 44A is provided. Inboard of the universal coupling 38, the inner drive shaft 34 of the second drive line is supported by a bearing arrangement 36. It will be appreciated that an embodiment of the present invention may be realised having bearing arrangements supporting a drive line on each side of the differential 32, rather than on only one side as illustrated in the example.

It will be noted that the differential 32 and the drive shaft assemblies 34, 36, 38, 40, 44, 44A are illustrated as disposed to the rear side of the engine and transmission assembly 28, 30. This may leave only a tight gap 48 between the (or each) drive shaft bearing arrangement 36 and the firewall 26 or other fixtures/components in the engine bay 24. Service access in this region 48 may therefore be restricted in certain installations of this type.

The drive shaft bearing arrangement 36 includes a bearing support member in the form of a bracket 50. The bracket 50 comprises a backing plate 52 on which are formed a series of mounting bosses 54 through each of which is defined a mounting hole 56. At least in embodiments in which it is realised as a separate component, the bracket 50 may be made from various materials and using one or more of a variety of manufacturing techniques and materials, e.g. casting, forging, moulding, fabrication and machining from solid. In use, the bracket 50 may be attached to a set of associated mounting lugs on another part of the powertrain, e.g. on the side of engine 28. In some variations, the mounting bracket 50 may be formed as an integral part of a powertrain or engine bay component, such as for example a cylinder block or casting of the engine 28 or as part of an ancillary device or a fixture such as an engine mounting.

The bracket 50 further comprises a support member in the form of a bearing support arm 58 in which is defined a bearing seat 60. The bearing seat 60 is of appropriate dimensions to receive and support a bearing used itself for rotatably supporting the inner drive shaft 34. In the embodiment illustrated, the bearing comprises a roller bearing such as a ball race or needle roller and may be referred to for convenience as a drive shaft centre bearing 62.

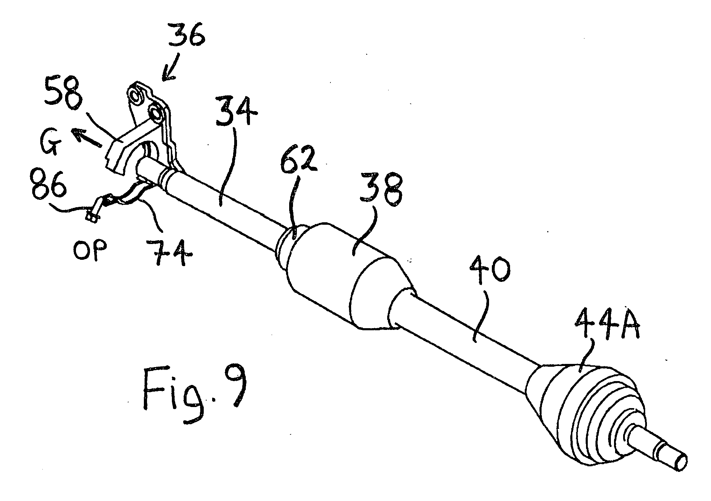

The bearing seat 60 is complementary to the profile of an outer race 64 of the centre bearing 62 and is therefore annular in cross-section. The bracket 50 further comprises a shoulder 66 that extends across at least a portion of one end of the bearing seat 60 so as to define a limit to an axial position of a centre bearing 62 that is fitted into that bearing seat 60. In the embodiment illustrated, this shoulder 66 is in the form of an annular flange extending inwardly around one end of the bearing seat 60. The shoulder 66 defines a passage 68 therethrough that is large enough to provide a running clearance for the inner drive shaft 34 but narrow enough to block axial movement of the centre bearing 62 out of the bearing seat 60 in the direction of that shoulder 66. This arrangement of bearing seat 60 and shoulder 66 allows the centre bearing 62 to be introduced axially into its seat 60 from one side during assembly or servicing and to be positioned accurately therein in the same operation. It will be appreciated that the centre bearing 62 may be introduced into its seat 60 either on its own or already assembled onto a drive shaft. The latter case is illustrated with particular reference to Figure 9, in which the centre bearing 62 is already assembled onto the inner drive shaft 34 prior to insertion into the bearing seat 60 in the direction of the arrow G.

The bearing seat 60 does not completely surround a centre bearing 62 supported therein because the portion of the support arm 58 that defines the bearing seat 60 is open around a sector 70 thereof. A chord 72 across the extremities of this sector 70 is smaller than the outer diameter of the centre bearing 62. This ensures that the centre bearing 62 cannot fall out of its seat 60 in a radial direction, e.g. during assembly or servicing.

The bearing support arrangement further comprises a retaining member in the form of a centre bearing cap 74 that is adapted to retain the centre bearing 62 in place in bearing seat 60. In this position, a centre-line through the centre bearing 62 may be expected to be substantially aligned with a centre-line running along the axis of rotation of the inner drive shaft 34 and an inward facing axial side of the outer race 64 abuts the shoulder 66. In a preferred embodiment, the bearing cap 74 may be made from a planar material such as sheet or plate steel and may be shaped using a deformation technique, e.g. stamping, pressing, folding or hydroforming. In variations, other techniques and/or materials may be used to form the bearing cap 74, e.g. casting or forging.

The bearing cap 74 is connected to the support arm 58 at a fulcrum 76 and is pivotally moveable about that fulcrum 76 between an open position OP, through intermediate open positions IT and into a closed position CL. The pivotal connection may be effected by means of a pivot pin 78, which may comprise a roll pin although connection by equivalent means may be envisaged for other embodiments, e.g. a hinge or folded-over lip. The bearing cap 74 includes a pair of substantially opposing hinge members 88 that slot over a fulcrum region of the support arm 58, through which fulcrum region is defined a hole adapted to receive the pivot pin 78. The pivot pin 78 passes through the hole defined in the support arm 58 and through associated pivot holes defined in each of the hinge sides 88.

In the embodiment illustrated, the bearing cap 74 is formed as an elongate strip of substantially the same width as the outer race 64 of the centre bearing 62. A portion of the elongate strip is formed into a curve 80 that substantially follows the profile of an outside facing side 82 of the outer race 64 of the centre bearing 62. The bearing cap 74 may also be provided with a strengthening member on at least the fulcrum side of the curved portion 80. The strengthening member may be in the form of a fillet or plate 75 whose function is to brace the curved portion 80 against fracture away from the end of the bearing cap 74 that is associated with the or each fillet/plate 75.

Substantially opposing side walls 84 are provided along each side of the bearing cap 74 along at least a portion of the curve 80. These side walls 84 are adapted to envelope at least partially a portion of the outer race 64 such that, when the bearing cap 74 is closed up (CL) against the centre bearing 62 and/or support arm 58, at least axial movement of the centre bearing 62 is restricted by the bearing cap 74 in at least one and preferably either axial direction along a centre line through the centre bearing 62. This is achieved by the bearing cap 74, and in particular at least one side wall 84 thereof, closing the open sector 70 at least partially. When the bearing cap 74 is in the closed position CL, it can therefore be seen that its at least partial closure of the open sector 70 traps the centre bearing 62 in place in its seat 60, i.e. substantially abutting the shoulder 66 and restricted from movement out of its seat 60 in a direction away from the shoulder 66. With the bearing cap 74 in the open position OP, the centre bearing 62 is therefore removable from its bearing seat 60 while, with the bearing cap 74 in the closed position CL, the centre bearing 62 is trapped in its bearing seat 60. For security of fixture, the bearing cap 74 may be fixed in place in its closed position CL. Such closure may be achieved using preferably only one mechanical fixing, illustrated by way of example as a machine screw or bolt 86 arranged to co-operate with a threaded hole 86A defined in the support arm 58.

In the open position OP and preferably also in some intermediate positions IT, the centre bearing 62 is therefore removable from its bearing seat 60. Such removal is performed axially along a centre line through the bearing seat 60 and, due to the reduced inner diameter of the shoulder 66, it must be performed in an axial direction away from the shoulder 66. Removal of the centre bearing 62 may be effected as an assembly with the inner drive shaft 34 or may be effected separately after clearing the inner drive shaft 34 out the way.

Fixing the bearing cap 74 to the support arm 58 by a pivoting connection 88, 78, 76 saves a manufacturer from providing a separate bearing cap lineside (e.g. item 24 in Figure 1). In any version of assembly or disassembly of the centre bearing 62, it can also be seen that it is necessary for a fitter or service agent to only deal with one fixing 86 rather than at least two (26). This saves cost and supply complexity for a manufacturer who only needs to account for the supply and fitting of one mechanical fixing 86 on the side of the production line, rather than two loose fixings (26) and also a loose bearing cap (24). Furthermore, a production line worker or service agent need only concern themselves with one fixing 86 and has no loose bearing cap to worry about. Fitting and servicing may be performed by simply pivoting/swinging the bearing cap 74 between open OP and closed CL positions as appropriate.

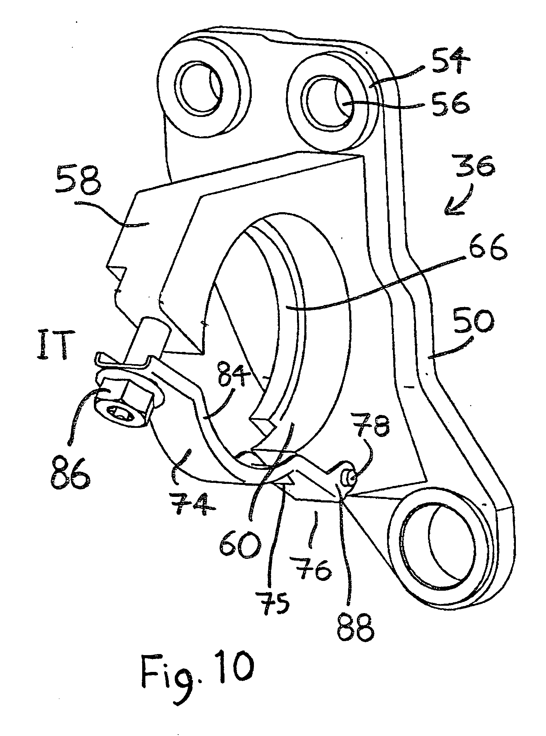

Referring for the moment in particular to Figure 10, it will be appreciated that the bearing assembly 36 may be delivered to the production line part assembled. In such an arrangement, the bearing cap 74 may be loosely assembled to the support arm 58 by starting the bolt 86 in its thread 86A or loosened to such a position in service, thus allowing the bearing cap 74 to be opened to an intermediate position IT in which there is enough clearance for bearing fitting or removal as the case may be. This would mean there were even fewer loose parts and would lend itself to easier installation/removal of the drive shaft and bearing assembly 34, 62, as at least one further operation would be cut out. The bracket assembly 36 could of course be fixed to the engine and then part assembled. The mechanical fixing used, e.g. the bolt 86, may be captive such that it is difficult to remove and open the bearing cap 74 fully. Such an arrangement could further help keep down the possible number of loose parts during assembly or servicing.

An arrangement according to the present invention may also prove particularly advantageous in fitting or servicing drive shaft centre bearings 62 in installations where access space 48 is limited. Only needing to access one fixing 86 gives greater scope to a designer in space utilisation and eases the task of the fitter or service agent. It will be appreciated that use of a bearing support arrangement 36 according to the present invention may not be limited to only front wheel drive vehicles as illustrated above by way of example. Such bearing support arrangements 36 may be used advantageously in other installations and in particular in installations where access to a multi-fixing arrangement proves difficult. Such situations may well arise also in rear wheel drive vehicles and in vehicles with multiple driven axles.

## Claims

1. Use in a vehicle driveshaft arrangement of a driveshaft bearing support apparatus adapted to house a driveshaft bearing (62) for rotatably supporting a drive shaft (34) of said vehicle, said bearing support apparatus (36) comprising a support member (58) that defines a bearing seat (60) adapted to receive said driveshaft bearing and a retaining member (74) adapted to trap said driveshaft bearing in said bearing seat, **characterised in that** said retaining member (74) is connected to said support member (58) at a fulcrum (76) and is pivotally moveable about said fulcrum between an open position (OP ; IT) in which said driveshaft bearing (62) is removable from said bearing seat (60) and a closed position (CL) in which said driveshaft bearing is trapped in said bearing seat.

2. Use according to claim 1, wherein said driveshaft (34) is operably connected to a front driven member of said vehicle.

3. A bearing support apparatus adapted to house a driveshaft bearing (62) for rotatably supporting a drive shaft (34) of a vehicle, said bearing support apparatus comprising a support member (58) that defines a bearing seat (60) adapted to receive said driveshaft bearing and a retaining member (74) adapted to trap said driveshaft bearing in said bearing seat, said retaining member (74) being connected to said support member (58) at a fulcrum (76) and being pivotally moveable about said fulcrum between an open position (OP ; IT) in which said driveshaft bearing (62) is removable from said bearing seat (60) and a closed position (CL) in which said driveshaft bearing is trapped in said bearing seat, **characterised in that** said bearing seat (60) includes a portion that is substantially annular in cross section and is open across a sector (70) thereof, a chord (72) across said open sector being less than a diameter of said bearing (62), such that the bearing (62) cannot fall out of the seat (60) in a radial direction.

4. An apparatus according to claim 3, wherein said retaining member (74) is adapted to trap said bearing (62) in place by closing said open sector (70) in such a manner as to restrict movement of said bearing in at least one axial direction.

5. An apparatus according to claim 3 or claim 4, wherein said bearing support member (58) comprises a shoulder (66) across at least a portion of one end of said bearing seat (60) so as to define a limit to an axial position of said driveshaft bearing (62) in said bearing seat (60).

6. An apparatus according to any one of claims 3 to 5, wherein said retaining member (74) is adapted to be fixed in place in said closed position (CL), preferably by means of a single mechanical fixing (86).

7. An apparatus according to any one of claims 3 to 6, wherein at least a portion (84) of said retaining member (74) is adapted in said closed position (CL) to envelop, at least partially, substantially opposing axial faces of an outer casing (64) of said bearing (62).

8. An apparatus according to any one of claims 3 to 7, wherein said retaining member (74) is formed from a planar material, preferably shaped by means of a deformation technique.

9. An apparatus according to any one of claims 3 to 8, wherein said retaining member (74) is attached to said support member (58) at said fulcrum (76) by a pivot pin (78).

10. An apparatus according to any one of claims 3 to 9, wherein said bearing (62) comprises a roller bearing and said retaining member (74) comprises a bearing cap having a portion (80) substantially corresponding to a profile of a sector of an outer race (64) of said roller bearing, said bearing cap preferably being adapted to close substantially directly onto said sector.

11. A method of retaining in position a vehicle driveshaft centre-bearing (62) on a vehicle, the method including trapping said bearing (62) in place in a bearing seat (60) defined in a drive shaft bearing support (58) using a bearing cap (74) that is pivotally connected (78) to said support and is adapted to pivot between an open position (OP ; IT) in which said drive shaft bearing is removable from said bearing seat and a closed position (CL) in which said drive shaft bearing is trapped in place in said bearing seat by said bearing cap.

12. A method according to claim 11, including fitting said bearing (62) to said drive shaft (34) before introducing said bearing into said bearing seat (60).

13. A method according to claim 11 or claim 12, including delivering to a production line a bearing assembly (36) part assembled, in which said bearing cap (78) is loosely assembled to a support arm (58).

14. A method according to claim 13, wherein said bearing cap (78) is loosely assembled by starting a bolt (86) in its thread (86A).

15. A method according to claim 13 or claim 14, wherein the bearing cap (78) is loosely assembled such that it can be opened into an intermediate position (IT) in which there is enough clearance for fitting said bearing (62).

## Patentansprüche

1. Verwendung in einer Fahrzeugantriebswellen-Anordnung einer Antriebswellenlager-Stützvorrichtung, die dazu geeignet ist, ein Antriebswellenlager (62) unterzubringen, um eine Antriebswelle (34) des Fahrzeugs drehbar abzustützen, wobei die Lagerstützvorrichtung (36) ein Stützglied (58), das einen Lagersitz (60) festlegt, der geeignet ist, um das Antriebswellenlager aufzunehmen, und ein Halteglied (74), das geeignet ist, um das Antriebswellenlager in dem Lagersitz einzuschließen, umfasst, **dadurch gekennzeichnet, dass** das Halteglied (74) an das Stützglied (58) an einem Hebelpunkt (76) angeschlossen ist und um den Hebelpunkt zwischen einer offenen Stellung (OP; IT), in der das Antriebswellenlager (62) von dem Lagersitz (60) entfernt werden kann, und einer geschlossenen Stellung (CL), in der das Antriebswellenlager in dem Lagersitz eingeschlossen ist, schwenkbar ist.

2. Verwendung nach Anspruch 1, wobei die Antriebswelle (34) betriebsfähig an ein angetriebenes Vorderglied des Fahrzeugs angeschlossen ist.

3. Lagerstützvorrichtung, geeignet um ein Antriebswellenlager (62) unterzubringen, um eine Antriebswelle (34) eines Fahrzeugs drehbar abzustützen, wobei die Lagerstützvorrichtung ein Stützglied (58), das einen Lagersitz (60) festlegt, der geeignet ist, um das Antriebswellenlager aufzunehmen, und ein Halteglied (74), das geeignet ist, um das Antriebswellenlager in dem Lagersitz einzuschließen, umfasst, wobei das Halteglied (74) an dem Stützglied (58) an einem Hebelpunkt (76) angeschlossen und um den Hebelpunkt zwischen einer offenen Stellung (OP; IT), in der das Antriebswellenlager (62) von dem Lagersitz (60) entfernt werden kann, und einer geschlossenen Stellung (CL), in der das Antriebswellenlager in dem Lagersitz eingeschlossen ist, schwenkbar ist, **dadurch gekennzeichnet, dass** der Lagersitz (60) einen Abschnitt umfasst, der im Querschnitt im Wesentlichen ringförmig und über einen Sektor (70) davon offen ist, wobei eine Bogensehne (72) über den offenen Sektor kleiner ist als ein Durchmesser des Lagers (62), so dass das Lager (62) nicht in radialer Richtung aus dem Sitz (60) fallen kann.

4. Vorrichtung nach Anspruch 3, wobei das Halteglied (74) dazu geeignet ist, um das Lager (62) an der Verwendungsstelle einzuschließen, indem der offene Sektor (70) derart geschlossen wird, dass er eine Bewegung des Lagers zumindest in einer axialen Richtung einschränkt.

5. Vorrichtung nach Anspruch 3 oder Anspruch 4, wobei das Lagerstützglied (58) eine Schulter (66) über mindestens einen Abschnitt eines Endes des Lagersitzes (60) umfasst, um eine Grenze für eine Axialposition des Antriebswellenlagers (62) in dem Lagersitz (60) festzulegen.

6. Vorrichtung nach einem der Ansprüche 3 bis 5, wobei das Halteglied (74) angepasst ist, um in der geschlossenen Stellung (CL) an der Verwendungsstelle befestigt zu werden, bevorzugt mittels einer einzigen mechanischen Befestigung (86).

7. Vorrichtung nach einem der Ansprüche 3 bis 6, wobei mindestens ein Abschnitt (84) des Halteglieds (74) in der geschlossenen Stellung (CL) angepasst ist, um mindestens teilweise im Wesentlichen entgegengesetzte Axialseiten eines Außengehäuses (64) des Lagers (62) einzuhüllen.

8. Vorrichtung nach einem der Ansprüche 3 bis 7, wobei das Halteglied (74) aus einem ebenen Material gebildet ist, das bevorzugt mittels einer Verformungstechnik gestaltet wird.

9. Vorrichtung nach einem der Ansprüche 3 bis 8, wobei das Halteglied (74) an dem Stützglied (58) durch einen Drehzapfen (78) an dem Hebelpunkt (76) angebracht ist.

10. Vorrichtung nach einem der Ansprüche 3 bis 9, wobei das Lager (62) ein Rollenlager und das Halteglied (74) einen Lagerdeckel umfasst, der einen Abschnitt (80) aufweist, der im Wesentlichen einem Profil eines Sektors eines Außenlaufrings (64) des Rollenlagers entspricht, wobei der Lagerdeckel bevorzugt angepasst ist, um sich im Wesentlichen unmittelbar auf dem Sektor zu schließen.

11. Verfahren zum Festhalten eines Fahrzeugantriebswellen-Mittellagers (62) auf einem Fahrzeug, wobei das Verfahren das Einschließen des Lagers (62) an der Verwendungsstelle in einem Lagersitz (60) umfasst, der in einer Antriebswellenlager-Abstützung (58) festgelegt ist, indem ein Lagerdeckel (74) verwendet wird, der schwenkbar an die Abstützung angeschlossen (78) und angepasst ist, um zwischen einer offenen Stellung (OP; IT), in der das Antriebswellenlager aus dem Lagersitz entfernt werden kann, und einer geschlossenen Stellung (CL), in der das Antriebswellenlager in dem Lagersitz durch den Lagerdeckel an der Verwendungsstelle eingeschlossen ist, zu schwenken.

12. Verfahren nach Anspruch 11, umfassend das Einbauen des Lagers (62) an der Antriebswelle (34), bevor das Lager in den Lagersitz (60) eingefügt wird.

13. Verfahren nach Anspruch 11 oder Anspruch 12, umfassend das Abgeben an eine Fertigungsstraße einer teilmontierten Lageranordnung (36), wobei der Lagerdeckel (78) lose an einen Stützarm (58) montiert ist.

14. Verfahren nach Anspruch 13, wobei der Lagerdeckel (78) lose montiert ist, indem ein Bolzen (86) in seinem Gewinde (86A) angeschraubt wird.

15. Verfahren nach Anspruch 13 oder Anspruch 14, wobei der Lagerdeckel (78) lose montiert ist, so dass er in einer Zwischenposition (IT) geöffnet werden kann, in der genug Spielraum zum Einbauen des Lagers (62) vorliegt.

## Revendications

1. Utilisation dans un agencement pour un arbre de transmission de véhicule d'un appareil de support de corps de palier d'arbre de transmission adapté pour y loger un palier d'arbre de transmission (62) de manière à supporter de manière rotative un arbre de transmission (34) dudit véhicule, ledit appareil de support de corps de palier (36) comprenant un élément de support (58) qui définit une portée de palier (60) adaptée de façon à recevoir ledit palier de l'arbre de transmission et un élément de retenue (74) adapté de façon à immobiliser ledit palier de l'arbre de transmission dans ladite portée de palier, **caractérisée en ce que** ledit élément de retenue (74) est relié audit élément de support (58) à un pivot (76) et **en ce qu'**il peut bouger en pivotant autour dudit pivot entre une position ouverte (OP : IT) dans laquelle ledit palier de l'arbre de transmission (62) peut être enlevé de ladite portée de palier (60) et une position fermée (CL) dans laquelle ledit palier de l'arbre de transmission est immobilisé dans ladite portée de palier.

2. Utilisation selon la revendication 1, ledit arbre de transmission (34) étant relié de manière opérationnelle à un élément entraîné avant dudit véhicule.

3. Appareil de support de corps de palier adapté pour y loger un palier d'arbre de transmission (62) afin de supporter de manière rotative un arbre de transmission (34) d'un véhicule, ledit appareil de support de corps de palier comprenant un élément de support (58) qui définit une portée de palier (60) adaptée de façon à recevoir ledit palier de l'arbre de transmission et un élément de retenue (74) adapté de façon à immobiliser ledit palier de l'arbre de transmission dans ladite portée de palier, ledit élément de retenue (74) étant relié audit élément de support (58) à un pivot (76) et pouvant bouger en pivotant autour dudit pivot entre une position ouverte (OP : IT) dans laquelle ledit palier de l'arbre de transmission (62) peut être enlevé de ladite portée de palier (60) et une position fermée (CL) dans laquelle ledit palier de l'arbre de transmission est immobilisé dans ladite portée de palier, **caractérisé en ce que** ladite portée de palier (60) comprend une portion qui a une coupe transversale essentiellement annulaire et qui est ouverte sur un secteur (70) de celle-ci, une corde (72) en travers dudit secteur ouvert étant d'un diamètre inférieur à un diamètre dudit palier (62) de façon à ce que le palier (62) ne puisse pas tomber hors de la portée (60) dans une direction radiale.

4. Appareil selon la revendication 3, dans lequel ledit élément de retenue (74) est adapté de façon à immobiliser ledit palier (62) en position en fermant ledit secteur (70) d'une manière telle à restreindre le mouvement dudit palier dans au moins une direction axiale.

5. Appareil selon la revendication 3 ou la revendication 4, ledit élément de support de corps de palier (58) comportant un épaulement (66) sur au moins une portion d'une extrémité de ladite portée de palier (60) de façon à définir une limite à une position axiale dudit palier de l'arbre de transmission (62) dans ladite portée de palier (60).

6. Appareil selon l'une quelconque des revendications 3 à 5, ledit élément de retenue (74) étant adapté de façon à être fixé en place dans ladite position formée (CL), de préférence au moyen d'une seule fixation mécanique (86).

7. Appareil selon l'une quelconque des revendications 3 à 6, au moins une portion (84) dudit élément de retenue (74) étant adaptée dans ladite position fermée (CL) de façon à envelopper, au moins partiellement, les faces axiales essentiellement opposées d'un carter extérieur (64) dudit palier (62).

8. Appareil selon l'une quelconque des revendications 3 à 7, ledit élément de retenue (74) étant formé à partir d'un matériau plan, formé de préférence au moyen d'une technique de déformation.

9. Appareil selon l'une quelconque des revendications 3 à 8, ledit élément de retenue (74) étant attaché audit élément de support (58) à l'endroit dudit pivot (76) par un axe de pivotement (78).

10. Appareil selon l'une quelconque des revendications 3 à 9, ledit palier (62) comprenant un roulement à rouleaux et ledit élément de retenue (74) comprenant un chapeau de palier ayant une portion (80) correspondant sensiblement à un profil d'un secteur d'une bague de roulement extérieure (64) dudit roulement à rouleaux, ledit chapeau de palier étant de préférence adapté de façon à se fermer essentiellement directement sur ledit secteur.

11. Procédé de retenue en position d'un palier central d'arbre de transmission (62) sur un véhicule, ce procédé comprenant l'immobilisation dudit palier (62) en position dans une portée de palier (60) définie dans un support de corps de palier d'arbre de transmission (58) au moyen d'un chapeau de palier (74) qui est relié (78), de manier à pivoter, audit support et qui est adapté de façon à pivoter entre une position ouverte (OP : IT) dans laquelle ledit palier de l'arbre de transmission peut être enlevé de ladite portée de palier et une position fermée (CL) dans laquelle le palier de l'arbre de transmission est immobilisé en position dans ladite portée de palier par ledit chapeau de palier.

12. Procédé selon la revendication 11, comprenant la pose dudit palier (62) sur ledit arbre de transmission (34) avant d'introduire ledit palier dans ladite portée de palier (60).

13. Procédé selon la revendication 11 ou la revendication 12, comprenant la fourniture à une chaîne de production d'un ensemble palier (36) partiellement assemblé, ledit chapeau de palier (78) étant assemblé de manière lâche à un bras de support (58).

14. Procédé selon la revendication 13, ledit chapeau de palier (78) étant assemblé de manière lâche, en commençant à enfiler un boulon (86) dans son filet (86A).

15. Procédé selon la revendication 13 ou la revendication 14, le chapeau de palier (78) étant assemblé de manière lâche de façon à pouvoir être ouvert dans une position intermédiaire (IT) dans laquelle il y a un jeu suffisant pour monter ledit palier (62).
